# EUROPÄISCHE PATENTANMELDUNG

(11) **EP 0 891 950 A1**
(43) Veröffentlichungstag der Anmeldung: **20.01.1999**
(21) Anmeldenummer: 97112200.7
(22) Anmeldetag: 17.07.1997
(51) Int. Cl.: C02F 1/44, B01D 61/58

(54) **Verfahren zur Aufbereitung von lösemittelhaltigen Prozessflüssigkeiten**

(71) Anmelder: PPG Industries Lacke GmbH, 42329 Wuppertal (DE)
(72) Erfinder: Kascha, Dietmar, 65760 Eschborn 2 (DE); Manderscheid, Karl, Dipl. Ing., 50935 Köln (DE); Lindemann, Johannes, Dr., 53619 Rheinbreitbach (DE)
(74) Vertreter: Fleischer, Holm Herbert, Dr.

(57) **Zusammenfassung**

Die vorliegende Erfindung betrifft ein Verfahren zur Aufbereitung von verbrauchten Prozeßflüssigkeiten aus der lackverarbeitenden Industrie, die Feststoffanteile, organische Lösemittel und Wasser enthalten, durch:
a. Auftrennen der Prozeßflüssigkeit (1) durch Ultrafiltration (2) in ein Retentat (3) und ein Permeat (5),
b. Auftrennen des Ultrafiltrationspermeats (5) durch Umkehrosmose (6) in ein lösemittelhaltiges Konzentrat (7) und in ein Permeat (9), das im wesentlichen frei von organischen Lösemitteln ist und
c. getrenntes Verwerten (4, 8, 10) des Ultrafiltrationsretentats (3), des lösemittelhaltigen Konzentrats (7) der Umkehrosmose (6) und des Umkehrosmosepermeats (9).

## Beschreibung

Die vorliegende Erfindung betrifft ein Verfahren zur Aufbereitung von lösemittelhaltigen Prozeßflüssigkeiten aus der lackverarbeitenden Industrie insbesondere von verbrauchten Spülflüssigkeiten.

Die Ausgangsspülflüssigkeiten, die zum Spülen und Reinigen der Lackversorgung in Lackieranlagen bedingt durch Farbtonwechsel, Lackaustausch, Reinigung, Instandhaltung usw. eingesetzt werden, enthalten organische Lösemittel in einer Menge von 10-50 Gew% in vollentsalztem Wasser. Im Laufe des Reinigungsprozesses werden die Lackversorgungseinrichtungen mit vollentsalztem Wasser nachgespült. Verbrauchte Spülflüssigkeiten, die bei Lackierprozessen in der Automobilindustrie bei Verwendung von Lacksystemen auf Wasserbasis anfallen, weisen daher im allgemeinen einen Feststoffanteil von 4 - 15 Gew%, einen Anteil an niedermolekularen organischen Lösemitteln von bis zu 15 Gew% und den Rest vollentsalztes Wasser bezogen auf die Gesamtmasse der Spülflüssigkeit auf.

Die bisher bekannten und angewandten Konzepte für die Aufbereitung verbrauchter Spülflüssigkeit umfassen die Verbrennung, die Destillation und die direkte Einleitung der Spülflüssigkeit in das Umlaufwasser der Spritzkabinen für den Lackierprozeß. Aufgrund des hohen Wasseranteils der Spülflüssigkeit ist der Energieaufwand bei den ersten beiden oben aufgeführten Konzepten sehr hoch. Darüber hinaus sind die Emissionen umweltgefährdender Stoffe bei der Verbrennung und der Einleitung in das Umlaufwasser unakzeptabel hoch und es entstehen zusätzliche Kosten und Gefahren durch den Transport der Spülflüssigkeit vom Entstehungsort zum Entsorgungsort, der in der Regel bei der Verbrennung und Destillation notwendig ist. Weiterhin gehen bei der Verbrennung und der Einleitung in das Umlaufwasser wertvolle Stoffe wie z.B. organische Lösemittel und vollentsalztes Wasser verloren.

Es besteht daher das Bedürfnis, ein kostengünstigeres und umweltverträglicheres Aufbereitungsverfahren für lösemittelhaltige Prozeßflüssigkeiten aus der lackverarbeitenden Industrie zur Verfügung zu stellen.

Aus EP-A-0 675 080 ist ein Verfahren zur Aufkonzentration des in Spritzkabinen mit Naßauswaschung anfallenden Oversprays durch eine mehrstufige Membranfiltration bekannt. Hierbei wird das aufzukonzentrierende Kabinenwasser/Overspray-Gemisch in einer Ultrafiltrationsstufe vorkonzentriert, indem man es in ein Retentat und ein niedermolekulare Bestandteile enthaltendes Permeat auftrennt. Das Ultrafiltrationspermeat wird zusammen mit einem Nanofiltrationspermeat einer Umkehrosmosestufe zugeführt. Das Retentat der Umkehrosmose und das Retentat der Ultrafiltration werden einer Nanofiltrationsstufe zugeführt, wo eine Auftrennung in ein Retentat und ein Permeat erfolgt. Das Retentat der Nanofiltration entspricht weitgehend bezüglich Konzentration und Lackzusammensetzung dem eingesetzten Wasserlack und kann daher hierfür direkt oder als Bestandteil einer Lackzusammensetzung verwendet werden. Das Permeat der Umkehrosmose kann in den Kabinenwasserkreislauf zurückgeführt werden.

Der wesentliche Punkt dieses Verfahrens liegt darin, daß auch die niedermolekularen Bestandteile des Lacks wie z.B. Vernetzungsmittel abgetrennt werden und in das aufkonzentrierte Retentat der Ultrafiltration zurückgeführt werden. Letztendlich findet bei diesem Verfahren die Aufkonzentration der Lackbestandteile des Kabinenwasser/Overspray-Gemisches unter Abtrennung von Wasser statt. Somit ist dieses Verfahren ungeeignet, um die Anteile an organischem Lösemittel in der Spülflüssigkeit zurückzugewinnen.

Die Aufgabe, die der vorliegenden Erfindung zu Grunde liegt, besteht daher darin, ein kostengünstiges Aufbereitungsverfahren für lösemittelhaltige Prozeßflüssigkeiten zur Verfügung zu stellen, das insbesondere eine Wiederverwertung der Lösemittel und des Prozeßwassers ermöglicht.

Diese Aufgabe wird gelöst durch ein Verfahren zur Aufbereitung von verbrauchten Prozeßflüssigkeiten aus der lackverarbeitenden Industrie, die Feststoffanteile, organische Lösemittel und Wasser enthalten, durch:
a. Auftrennen der Prozeßflüssigkeit durch Ultrafiltration in ein Retentat und ein Permeat,
b. Auftrennen des Ultrafiltrationspermeats durch Umkehrosmose in ein lösemittelhaltiges Konzentrat und in ein Permeat, das im wesentlichen frei von organischen Lösemitteln ist und
c. getrennte Verwertung des Ultrafiltrationsretentats, des lösemittelhaltigen Konzentrats aus der Umkehrosmose und des Umkehrosmosepermeats.

Bei der Ultrafiltration im Sinne der vorliegenden Erfindung handelt es sich um ein Membrantrennverfahren, das mit Membranen mit einer Ausschlußgrenze von 200 bis 500.000 Da vorzugsweise von 1000 bis 250.000 Da durchgeführt wird. Die Druckdifferenz zwischen Ein- und Ausgang des Moduls bei der erfindungsgemäßen Ultrafiltration beträgt dabei 0,5 - 5 bar, vorzugsweise unter 1 bar. Mit dieser Betriebsweise kann ein Permeatfluß von 10 bis 80 l/m²h, vorzugsweise 15 bis 50 l/m²h erreicht werden. Dabei hängt der Permeatfluß der Ultrafiltration nicht nur von dieser Druckdifferenz sondern insbesondere auch von der Vorlagentemperatur ab. Die transmembrane Druckdifferenz beträgt bei der erfindungsgemäßen Ultrafiltration zwischen 1 - 5 bar.

Für die beim erfindungsgemäßen Verfahren zum Einsatz gelangende Ultrafiltrationseinheit sind alle marktüblichen Membranmodule geeignet, wie Kissen-, Platten-, Spiralwickel-, Rohr-, Kapillar-, Multikanal- oder Hohlfasermodule. Die Membranen können aus Polysulfon, Polyacrylnitril, Polyolefinen wie Polypropylen oder Polyethylen, Teflon, porösem Kohlenstoff, Keramik (wie z.B. Siliciumcarbid und Aluminiumoxid), Celluloseacetat, Polyharnstoff, aromatischen oder aliphatischen Polyamide, sulfonierte Polyarylethern, Polyfuran, Polybenzimidazol, verschiedenen Fluorpolymeren wie Polyvinylidenfluorid, Polyetheraromaten wie Polyimid oder Polyimidazopyrolidon oder ähnlichen Materialien hergestellt sein. Dem Fachmann auf dem hier einschlägigen Gebiet ist bekannt, wie er für das jeweilige Trennproblem die geeignete Ultrafiltrationseinheit auswählt. Als besonders geeignet für die erfindungsgemäße Ultrafiltrationsstufe haben sich Multikanal- oder Rohrmodule mit Aluminiumoxid-, Siliciumcarbid-, Polyvinylidenfluorid- und Polyacrylnitrilmembranen erwiesen.

Mit einer wie oben beschriebenen Ultrafiltrationsstufe gelingt das Auftrennen einer Prozeßflüssigkeit aus der Lackverarbeitenden Industrie in ein Konzentrat und in ein Permeat, das im wesentlichen nur noch Bestandteile mit einem Molekulargewicht von weniger als 1000 Da, vorzugsweise weniger als 200 Da enthält.

In einer besonders bevorzugten Ausführungsform der vorliegenden Erfindung wird für die Ultrafiltrationsstufe eine Membran mit einer großen Porenweite, die mit einer Ausschlußgrenze von 250 000 - 500 000 Da korrespondiert und mit Ladungsträgern, vorzugsweise positiven Ladungsträgern dotiert ist, verwendet. Mit einer solchen Membran wird sowohl eine sehr gute Trennschärfe als auch ein sehr hoher Permeatfluß bei niedrigen Differenzdrücken zwischen Ein- und Ausgang des Moduls von unter 1 bar erreicht. Überraschenderweise wurde bei dieser Membran festgestellt, daß sowohl der Permeatfluß als auch die Trennleistung bei niedrigen Differenzdrücken zwischen Ein- und Ausgang des Moduls unter 1 bar größer ist, als bei höheren Drücken, so daß mit einer solchen Membran eine besonders kostengünstige und wirksame Trennung möglich ist.

Um das gewünschte Trennergebnis zu erzielen, kann die Ultrafiltration auch mehrstufig durchgeführt werden.

Bei der erfindungsgemäßen Umkehrosmose handelt es sich ebenfalls um ein Membrantrennverfahren, bei dem Membranen verwendet werden, die Kochsalz zu mindestens 95 Gew.-%, vorzugsweise zu mindestens 98 Gew.-%, bevorzugter zu mindestens 99 Gew.-% zurückhalten. Die transmembrane Druckdifferenz liegt üblicherweise zwischen 15 und 100 bar, vorzugsweise zwischen 20 und 60 bar und bevorzugter zwischen 20 und 50 bar. Dabei wird ein Permeatfluß von 3 bis 30 l/m²h erreicht.

Für die Umkehrosmose sind gängige Membranmodule, wie Spiralwickel-, Rohr-, Kapillar- und Hohlfasermodule geeignet. Bei der Auswahl der Membranmaterialien ist insbesondere darauf zu achten, daß die Membranen gegenüber den organischen Lösemitteln insbesondere aprotische organische Lösemittel, die im Retentat der Umkehrosmose aufkonzentriert werden, beständig sind. Dabei kommen die oben im Zusammenhang mit der Ultrafiltration beschriebenen Materialien in Betracht. Als besonders geeignet haben sich Polyamidmembranen erwiesen.

Mit einer solchen erfindungsgemäßen Umkehrosmosestufe kann ein Permeat erhalten werden, das im wesentlichen frei von organischen Lösemitteln ist. Unter im "wesentlichen frei" wird im Sinne der vorliegenden Erfindung eine Konzentration an organischen Lösemitteln im Umkehrosmosepermeat von weniger als 0,2 Gew.-% bezogen auf die Gesamtmasse des Permeats, vorzugsweise von weniger als 0,1 Gew.-%, bevorzugter von weniger als 0,05 Gew.-% und am bevorzugtesten von weniger als 0,01 Gew.-% verstanden. Die Trennwirkung kann falls erforderlich durch ein mehrstufiges Umkehrosmoseverfahren noch verbessert werden.

In einer weiteren bevorzugten Ausführungsform des erfindungsgemäßen Verfahrens kann nach der Umkehrosmosestufe noch eine Pervaporationsstufe nachgeschaltet werden. Unter Pervaporation versteht man ein diffusionsgesteuertes Membrantrennverfahren, bei dem ein Dampfgemisch, das sich über einem Gemisch von Flüssigkeiten einstellt, infolge unterschiedlicher Permeabilität einer geeigneten Membran aufgetrennt wird. Durch ständiges Abpumpen des Dampfes auf der Gasseite der Membran wird ein Konzentrationsgefälle erzeugt, das die Diffusion aufrechterhält. Die Pervaporation eignet sich insbesondere um das Retentat der Umkehrosmose weiter aufzukonzentrieren. Sie kann aber auch und-/oder zur Entfernung von Lösemittelspuren im Umkehrosmosepermeat eingesetzt werden oder die Umkehrosmosestufe im erfindungsgemäßen Verfahren ganz ersetzen.

Das erfindungsgemäße Verfahren eignet sich insbesondere zur Aufbereitung verbrauchter Spülflüssigkeiten, die beim Reinigen und Spülen der Lackversorgung der Lackieranlagen in der Automobilindustrie anfallen. Dies betrifft insbesondere Lackieranlagen, in denen Lacksysteme auf Wasserbasis verarbeitet werden. Für solche Anlagen haben sich Spülflüssigkeiten, die neben entsalztem Wasser ein oder mehrere Lösemittel ausgewählt aus iso-Butanol n-Butanol, n-Propanol, iso-Propanol, Ethylenglykolmonobutylether, Butyldiglykol und n-Methylpyrrolidon enthalten, als geeignet erwiesen.

Die hierbei anfallenden verbrauchten Spülflüssigkeiten weisen im allgemeinen einen Feststoffanteil von 4 - 15 Gew%, einen Anteil an niedermolekularen organischen Lösemitteln von bis zu 15 Gew% und den Rest vollentsalztes Wasser bezogen auf die Gesamtmasse der Spülflüssigkeit auf. Der Feststoffanteil setzt sich im wesentlichen aus den Komponenten der jeweils verwendeten Lacke zusammen. Hierbei handelt es sich um Pigmente und Bindemittel im Bereich zwischen 2000 und 250.000 Da sowie um niedermolekulare Bestandteile insbesondere Vernetzungsmittel, die ein Molekulargewicht von unter 2000 Da aufweisen können. Die organischen Lösemittel stammen im wesentlichen aus der Spülflüssigkeit und zum geringen Teil aus dem jeweils verwendeten Lacksystem, bzw. sind Spaltprodukte aus dem Lacksystem.

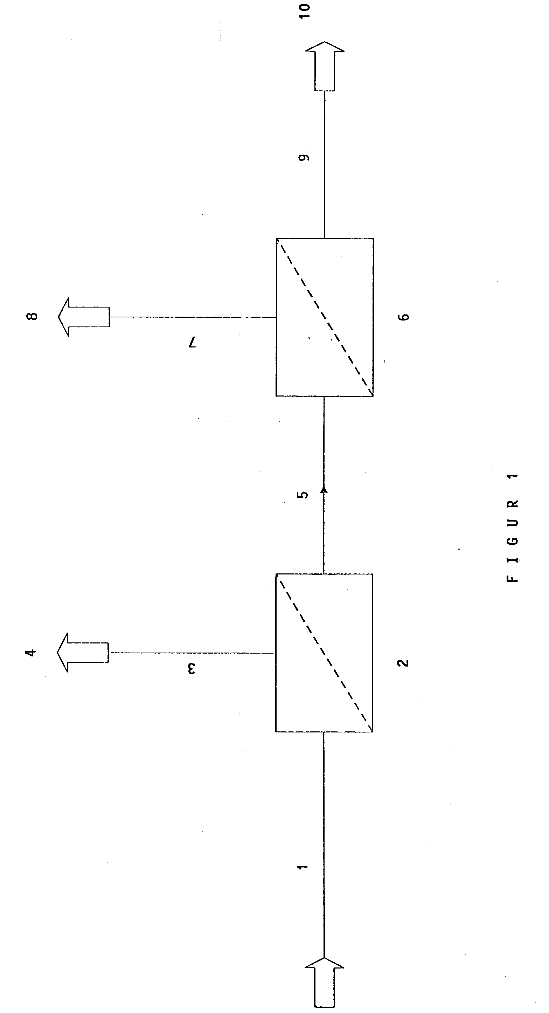

Das Prinzip des erfindungsgemäßen Verfahrens ist in Figur 1 verdeutlicht.

Es bedeuten:
(1) verbrauchte Spülflüssigkeit
(2) Ultrafiltrationsstufe
(3) Retentat der Ultrafiltrationsstufe
(4) Wiederverwertung des Retentats der Ultrafiltrationsstufe
(5) Permeat der Ultrafiltrationsstufe
(6) Umkehrosmosestufe
(7) Retentat der Umkehrosmosestufe
(8) Wiederverwertung des Retentats der Umkehrosmosestufe
(9) Permeat der Umkehrosmosestufe
(10) Wiederverwertung des Permeats der Umkehrosmosestufe

Die verbrauchte Spülflüssigkeit 1 wird in einem Tank (nicht gezeigt) gesammelt und dann zur Wiederaufbereitung in eine Ultrafiltrationsstufe 2 geführt. In der Ultrafiltrationsstufe erfolgt eine Aufkonzentrierung der hochmolekularen Bestandteile der Spülflüssigkeit im Retentat 3 auf einen Feststoffgehalt von vorzugsweise mindestens 50 Gew.-%. Das Retentat 3 der Ultrafiltration wird dann der Weiterverwertung 4 z.B. direkte Verwertung als Lackbestandteile zugeführt. Das Permeat 5 aus der Ultrafiltrationsstufe 2 ist im wesentlichen frei von höher molekularen Bestandteilen mit einem Molekulargewicht von mehr als 1000 Da vorzugsweise mehr als 200 Da und enthält organische Lösemittel und Wasser. Dieses Permeat 5 wird einer Umkehrosmosestufe 6 zugeführt, in der die organischen Lösemittel im Retentat 7 auf eine Konzentration von mindestens 25 Gew.-%, vorzugsweise mindestens 50 Gew.-% aufkonzentriert und einer getrennten Verwertung 8 z.B. als Ausgangsspülflüssigkeit zugeführt werden. Das Permeat 9 der Umkehrosmose 6 ist im wesentlichen reines Wasser, das z.B. in den Spülprozeß zurückgeführt, aber auch für andere Anwendungen, wo entsalztes Wasser benötigt wird, eingesetzt werden kann.

Zur weiteren Verdeutlichung der vorliegenden Erfindung wird folgendes Beispiel angegeben:

Es wurde eine verbrauchte Spülflüssigkeit mit der in Tabelle 1 angebenen Zusammensetzung aus einer Vorlage bei einer Vorlagentemperatur von 20°C zur Aufkonzentrierung über eine Ultrafiltrationsstufe geführt. In der Ultrafiltrationsstufe wurde ein Rohrmodul mit einer keramischen Membran mit einer Ausschlußgrenze von 100.000 Dalton eingesetzt. Die Spülflüssigkeit trat feedseitig mit 3 m³/h in das Modul ein, wobei der Druck vor dem Modul 2,3 bar und der Druck hinter dem Modul 2,0 bar betrug. Die Ultrafiltration wurde bis zu einem Feststoffgehalt von 50 Gew.-% im Konzentrat geführt. Die Zusammensetzung des Permeats und des Retentats der Ultrafiltration wurde analytisch bestimmt und ist in Tabelle 1 angegeben.

Das Permeat dieser Ultrafiltration wurde dann einer Umkehrosmosestufe zugeführt. In der Umkehrosmosestufe wurde ein Wickelmodul mit einer Polyamidmembran mit einem Rückhalt für Kochsalz von maximal 99.2 % % verwendet. Das Ultrafiltrationspermeat trat feedseitig mit 0,75 m³/h ein, wobei die transmembrane Druckdifferenz 41 bar betrug. Die Umkehrosmose wurde bis zu einer Lösemittelkonzentration von 25 % im Konzentrat geführt. Die Zusammensetzung des Konzentrats und des Permeats der Umkehrosmose wurde analytisch bestimmt und ist in Tabelle 1 wiedergegeben.

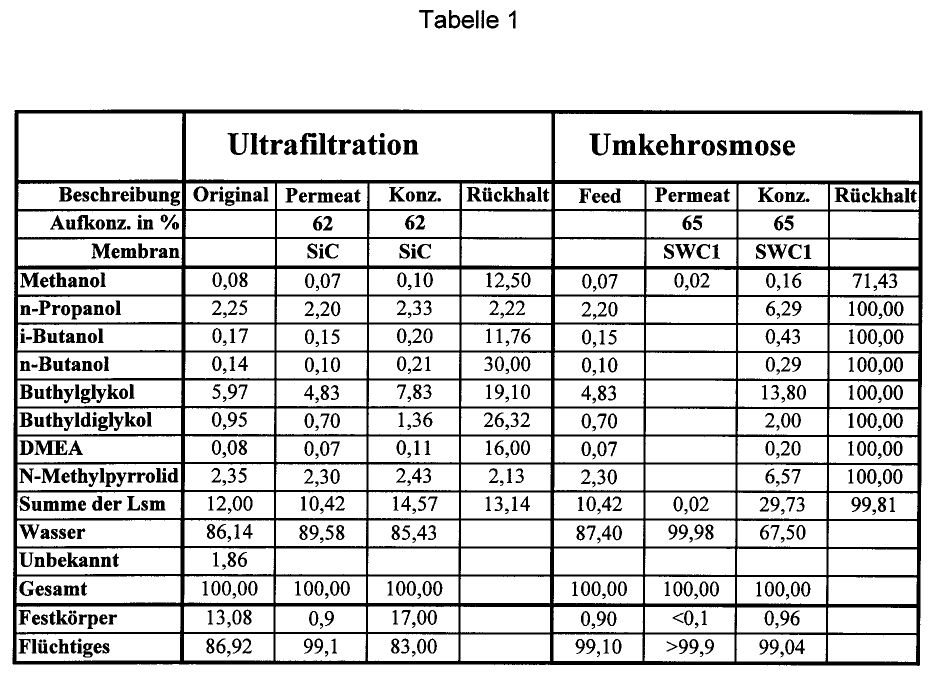

## Patentansprüche

1. Verfahren zur Aufbereitung von verbrauchten Prozeßflüssigkeiten aus der lackverarbeitenden Industrie, die Feststoffanteile, organische Lösemittel und Wasser enthalten, durch:
a. Auftrennen der Prozeßflüssigkeit (1) durch Ultrafiltration (2) in ein Retentat (3) und ein Permeat (5),
b. Auftrennen des Ultrafiltrationspermeats (5) durch Umkehrosmose (6) in ein lösemittelhaltiges Konzentrat (7) und in ein Permeat (9), das im wesentlichen frei von organischen Lösemitteln ist und
c. getrenntes Verwerten (4, 8, 10) des Ultrafiltrationsretentats (3), des lösemittelhaltigen Konzentrats (7) der Umkehrosmose (6) und des Umkehrosmosepermeats (9).

2. Verfahren nach Anspruch 1,
dadurch gekennzeichnet, daß
die Ultrafiltration (2) mehrstufig durchgeführt wird.

3. Verfahren nach einem der vorstehenden Ansprüche,
dadurch gekennzeichnet, daß
die Ultrafiltration (2) bei einer Druckdifferenz zwischen Eingang und Ausgang der Ultrafiltrationsmembran zwischen 0,5 und 5 bar, vorzugsweise unter 1 bar durchgeführt wird.

4. Verfahren nach einem der vorstehenden Ansprüche,
dadurch gekennzeichnet, daß
die Ultrafiltrationsmembran eine Porengröße aufweist, die einer Ausschlußgrenze von 250 000 Da - 500 000 Da entspricht und mit Ladungsträgern dotiert ist.

5. Verfahren nach Anspruch 4,
dadurch gekennzeichnet, daß
die Ultrafiltrationsmembran mit positiven Ladungsträgern dotiert ist.

6. Verfahren nach einem der Ansprüche 4 und 5
dadurch gekennzeichnet, daß
die Ultrafiltration mit einer Druckdifferenz zwischen Eingang und Ausgang der Ultrafiltrationsmembran von 0,5 bis 1 bar durchgeführt wird.

7. Verfahren nach einem der vorstehenden Ansprüche,
dadurch gekennzeichnet, daß
für die Umkehrosmose eine Membran verwendet wird, die Kochsalz zu mindestens 95%, vorzugsweise zu mindestens 98% zurückhält.

8. Verfahren nach Anspruch 7,
dadurch gekennzeichnet, daß
die Umkehrosmosemembran beständig gegenüber aprotischen Lösemitteln ist.

9. Verfahren nach einem der vorstehenden Ansprüche,
dadurch gekennzeichnet, daß
das Permeat der Umkehrosmose (6) mit einer Pervaporationsstufe weiter gereinigt wird.

10. Verfahren nach einem der vorstehenden Ansprüche,
dadurch gekennzeichnet, daß
das Konzentrat der Umkehrosmose (6) mit einer Pervaporationsstufe weiter aufkonzentriert wird.

11. Verfahren nach einem der Ansprüche 1-8,
dadurch gekennzeichnet, daß
die Umkehrosmose (6) mehrstufig durchgeführt wird.

12. Verfahren nach einem der Ansprüche 1-8,
dadurch gekennzeichnet, daß
die Umkehrosmosestufe (6) durch eine Pervaporationsstufe ersetzt wird.

13. Verfahren nach einem der vorstehenden Ansprüche,
dadurch gekennzeichnet, daß
die Prozeßflüssigkeit ein Gemisch von einem oder mehreren Lösemitteln ausgewählt aus iso-Butanol, n-Butanol, n-Propanol, iso-Propanol, Ethylenglykolmonobutylether, Butyldiglykol und n-Methylpyrrolidon enthält.
